# EUROPÄISCHE PATENTSCHRIFT

(11) **EP 1 064 162 B1**
(45) Veröffentlichungstag und Bekanntmachung des Hinweises auf die Patenterteilung: **18.02.2004**
(21) Anmeldenummer: 99960916.7
(22) Anmeldetag: 18.11.1999
(51) Int. Cl.: B60J 7/057, H02H 7/085, E05F 15/00

(54) **VERFAHREN UND VORRICHTUNG ZUM BETREIBEN EINES VERSTELLANTRIEBS IN EINEM KRAFTFAHRZEUG**
METHOD AND DEVICE FOR OPERATING AN ADJUSTING DRIVE IN A MOTOR VEHICLE
PROCEDE ET DISPOSITIF PERMETTANT DE FAIRE FONCTIONNER UNE COMMANDE DE REGLAGE DANS UN VEHICULE

(30) Priorität: 19.01.1999 DE 19901855
(43) Veröffentlichungstag der Anmeldung: 03.01.2001
(73) Patentinhaber: ROBERT BOSCH GMBH, 70442 Stuttgart (DE)
(72) Erfinder: KNAB, Norbert, D-77767 Appenweier (DE); BARTKE, Ralf-Michael, D-77815 Buehl (DE)
(86) Internationale Anmeldenummer: PCT/DE1999/003660
(87) Internationale Veröffentlichungsnummer: WO 2000/043227

(56) Entgegenhaltungen:
- WO-A-96/35036
- DE-A- 4 020 351
- DE-U- 29 514 786
- PATENT ABSTRACTS OF JAPAN vol. 1998, no. 06, 30. April 1998 (1998-04-30) & JP 10 054175 A (TOKAI RIKA CO LTD), 24. Februar 1998 (1998-02-24)

## Beschreibung

Die Erfindung betrifft ein Verfahren und eine Vorrichtung zum Betreiben eines Verstellantriebs in einem Kraftfahrzeug nach den, in DE 4 000 730 A1 offenbarten Oberbegriffen der Ansprüche, 1 und 5. Derartige Vorrichtungen werden zum Steuern der Verstellantriebe von Fensterhebern, Schiebedächern etc. eingesetzt.

### Stand der Technik

Ein derartiges Verfahren beziehungsweise eine derartige Vorrichtung sind aus DE 19615123 C1 bekannt. Genauer gesagt behandelt diese Schrift eine Vorrichtung und ein Verfahren zur elektronischen Überwachung eines in einem Fahrzeug angeordneten Verstellantriebs, die eine vom Verstellantrieb ausgeübte Betätigungskraft überwacht, um zu verhindern, daß diese einen Grenzwert überschreitet. Damit soll die Schädigung einer in den Schließbereich des durch den Verstellantrieb betätigten Fensters oder Schiebedachs geratenen Person oder des Verstellantriebs ausgeschlossen werden. Dabei ergibt sich das Problem, daß äußere Erschütterungen, denen das Fahrzeug ausgesetzt ist, etwa aufgrund von Unebenheiten der befahrenen Straße, die Messung der Betätigungskraft stören, indem sie Trägheitskräfte in dem Verstellantrieb oder dem von diesem verstellten Teil induzieren.

Gemäß DE 19615123 C1 soll dieses Problem gelöst werden, indem das Tachosignal des Fahrzeugs als Eingangsgröße für die Steuerung des Verstellantriebs herangezogen wird, und zwar, indem bei fahrendem Fahrzeug ein höherer Grenzwert der Schließkraftbegrenzung vorgegeben wird als bei stehendem Fahrzeug.

Dieser Ansatz ist jedoch noch nicht vollauf befriedigend. Die durch Erschütterungen induzierten Trägheitskräfte können beträchtliche Stärken erreichen. Um ein fehlerhaftes Ansprechen der Schließkraftbegrenzung aufgrund einer solchen Erschütterung zu vermeiden, muß der Grenzwert bei fahrendem Fahrzeug erheblich höher gewählt werden, als für einen wirksamen Schutz von Personen vor Verletzungen wünschenswert ist.

Ein weiteres Verfahren und eine Vorrichtung zum Betreiben eines Verstellantriebs in einem Kraftfahrzeug ist aus DE 4000730 A1 bekannt. Bei diesem Verfahren und dieser Vorrichtung ist vorgesehen, daß eine' Kenngröße, die einen Bezug zur Betätigungskraft des vom Verstellantrieb angetriebenen Teils aufweist, und der von dem Teil zurückgelegte Weg erfaßt werden. Anhand dieser Daten wird eine Ableitung der Kenngröße nach dem Weg gebildet. Der Wert dieser Ableitung wird überwacht, und der Verstellantrieb wird reversiert oder angehalten, wenn ein Grenzwert der Ableitung überschritten wird.

Die Überschreitung des Grenzwertes, der zum Anhalten oder Reversieren des Verstellantriebs führt, fällt bei dieser Vorrichtung nicht zwangsläufig mit der Überschreitung einer maximalen Schließkraft zusammen. Außerdem reagiert die Ableitung zwangsläufig wesentlich empfindlicher auf schnelle Kraftänderungen, wie sie insbesondere durch äußere Erschütterungen verursacht werden, als die Kenngröße, aus der sie berechnet wird. Um dies zu kompensieren, ist eine Signalfilterung in der Erfassung des Verlaufs der Kenngröße erforderlich.

### Vorteile der Erfindung

Mit der in den unabhängigen Ansprüchen definierten Erfindung wird ein Verfahren beziehungsweise eine Vorrichtung zum Betreiben eines Verstellantriebs geschaffen, die eine an den Bewegungszustand eines Kraftfahrzeugs angepaßte Unterdrückung von erschütteruhgsbedingten Störungen bei gleichzeitiger Einhaltung von festen Grenzwerten der ausgeübten Betätigungskraft ermöglichen. Dies wird erreicht, indem in Abhängigkeit vom Bewegungszustand des Kraftfahrzeugs unterschiedliche Filtermethoden zum Unterdrücken von durch Erschütterungen verursachten schnellen Änderungen der Betätigungskraft eingesetzt werden, wobei bei stehendem Fahrzeug die Unterdrückung aufgrund der geringeren Wahrscheinlichkeit von Erschütterungen schwächer sein kann als bei fahrendem Fahrzeug oder sogar ganz unterbleiben kann.

Als Kriterium zum Wechsel zwischen den zwei Filtermethoden kann in einfacher Weise die Zündung des Kraftfahrzeugs dienen.

Die erste Filtermethode, die bei fahrendem Fahrzeug beziehungsweise laufendem Motor des Fahrzeugs angewendet wird, filtert vorzugsweise Anstiege der Betätigungskraft aus, die 20 N/mm übersteigen. Änderungen der Betätigungskraft, die auf eine äußere Erschütterung zurückgehen, äußern sich in der Regel durch schnellere Änderungen der Betätigungskraft. Bei Zugrundelegung einer Federrate von 20 N/mm ist die erfindungsgemäße Vorrichtung ferner in der Lage, den Anstieg der Betätigungskraft über einen Weg von mindestens 5 mm zu beobachten, bevor eine maximale Kraft von 100 N erreicht ist, bei der nach gesetzlicher Vorschrift der Verstellantrieb reversieren soll. Auf diesen 5 mm kann eine große Zahl von Kraftmeßwerten aufgenommen werden, so daß, gegebenfalls durch Mittelung, Interpolation etc. auch unter Einwirkung von äußeren Störungen eine exakte Abschätzung der ausgeübten Kraft möglich ist.

Bei stehendem Fahrzeug kann eine wesentlich höhere Federrate von 65 N/mm verwendet werden. Unter solchen Bedingungen kann das gefilterte Signal auf einer Wegstrecke von 1, 5 mm von 0 auf 100 N wachsen. Da bei stehendem Fahrzeug aber im wesentlichen keine Erschütterungen zu erwarten sind, ist die Gewinnung einer großen Zahl von Meßwerten zwecks Ausmittelung von Fluktuationen weniger wichtig. Deshalb ist in diesem Fall diese Wegstrecke für eine genaue Messung ausreichend.

Weitere Merkmale und Vorteile der Erfindung ergeben sich aus der nachfolgenden Beschreibung eines Ausführungsbeispiels mit Bezug auf die beigefügten Figuren.

### Figuren

Figur 1 zeigt schematisch eine Schaltungsanordnung einer Vorrichtung zum Betreiben eines Verstellantriebs in einem Kraftfahrzeug, die zur Durchführung des erfindungsgemäßen Verfahrens geeignet ist.
Figur 2 zeigt eine Filteranordnung, die Teil der Vorrichtung aus Figur 1 ist.

### Ausführungsbeispiel

Ein Verstellantrieb 1 der in der Figur gezeigten Vorrichtung ist vorgesehen, um über einen (nicht dargestellten) Mechanismus einen Gegenstand wie etwa eine Fensterscheibe oder ein Schiebedach zu öffnen und zu schließen. Wenn der Verstellantrieb 1 in Schließrichtung angetrieben wird, erfaßt ein Sensor 2 die von diesem ausgeübte Betätigungskraft und erzeugt ein für diese repräsentatives Signal, das an einen Signaleingang einer Filteranordnung 4 angelegt wird. Dabei kann der Wert der Kraft insbesondere durch einen Pegel oder durch eine Pulsfolge des Signals repräsentiert sein. Der Sensor 2 kann zum Beispiel ein Piezo-Sensor sein, der an einer geeigneten Stelle am Verstellantrieb 1 oder dem Antriebsmechanismus angeordnet ist, wo er der Betätigungskraft direkt ausgesetzt ist und ein für diese repräsentatives Signal liefert. Alternativ kann der Sensor 2 auch die Stromaufnahme des Verstellantriebs 1 überwachen und auf diese Weise die Betätigungskraft indirekt ermitteln. Grundsätzlich ist jede Art von Sensor geeignet, aus dessen Ausgangssignal die Betätigungskraft eindeutig ermittelt werden kann. Zum Beispiel kann auch ein Hall-Sensor benutzt werden, der die Drehzahl des Verstellantriebs erfaßt und so die Bestimmung der Geschwindigkeit beziehungsweise Beschleunigung des Antriebsmechanismus ermöglicht. Aus dieser Beschleunigung kann eine Auswerteschaltung die Antriebskraft eindeutig berechnen.

Die Filteranordnung 4 verfügt über einen Steuereingang, an dem ein Signal I anliegt, dessen Pegel an die Zündung des Kraftfahrzeugs gekoppelt ist. Wenn das Signal I angibt, daß der Motor des Kraftfahrzeugs läuft, wird das vom Sensor 2 kommende Signal nach einer ersten Methode gefiltert, bei der die Filteranordnung 4 eine Übertragungsfunktion auf das vom Sensor 2 gelieferte Signal anwendet, die den Ort der zu schließenden Scheibe als Parameter hat. Zu diesem Zweck ist ein Meßwertgeber 10 an die Filteranordnung 4 angeschlossen, der, zum Beispiel durch Überwachen einer Drehbewegung einer Antriebswelle des Verstellantriebs 1, ein für die Bewegung der zu schließenden Scheibe repräsentatives Signal erzeugt. Die Filteranordnung 4 unterdrückt in dem vom 'Sensor 2 gelieferten Signal Anstiege der Betätigungskraft mit dem Ort von mehr als 20 N/mm. Auf diese Weise werden Anstiege ausgefiltert, die auf externe Erschütterungen, zum Beispiel beim Fahren auf unebenem Untergrund des Fahrzeugs zurückgehen, oder die durch Einklemmen eines Gegenstands entstehen könnten, der härter als ein menschliches Körperteil ist und der deshalb für einen wirksamen Verletzungsschutz von Personen nicht relevant ist.

Wenn das Signal I angibt, daß der Motor des Kraftfahrzeugs steht, so wendet nach einer ersten Variante des Verfahrens die Filteranordnung 4 eine zweite Methode an, bei der Anstiege der Betätigungskraft nur dann ausgefiltert werden, wenn sie einer Zunahme der Betätigungskraft von mehr als 65 N/mm entsprechen. Alternativ kann eine Filterung der vom Sensor 2 gelieferten Signale völlig unterbleiben, so daß diese unverändert die Filteranordnung 4 durchlaufen und an einen Vergleicher 3 weitergeleitet werden.

Der Vergleicher 3 vergleicht das Ausgangssignal des Filters 4 mit einem Referenzwert REF, dem ein vorgegebener Schwellwert der Betätigungskraft entspricht, der nach gesetzlicher Vorschrift maximal 100 N betragen darf. Dieser Schwellwert und damit der Referenzwert kann unterschiedlich vorgegeben sein. Da bei stehendem Fahrzeug im wesentlichen keine Störungen der Betätigungskraft durch Erschütterungen erfaßt werden, kann in diesem Fall der Schwellwert niedriger als bei fahrendem Fahrzeug angesetzt werden.

Das Ausgangssignal des Vergleichers, das die Überschreitung der jeweils geltenden maximalen Kraft anzeigt, ist an eine Steuerschaltung 5 angelegt, die über Steuereingänge 11 Befehle eines Benutzers empfängt, ein an den Verstellantrieb 1 angeschlossenes Fenster zu öffnen oder zu schließen. Je nach gewünschter Bewegungsrichtung aktiviert die Steuerschaltung 5 eine von zwei Schalteinheiten 6, 7. Die Schalteinheiten haben jeweils einen Leitungsausgang zum Versorgen des Verstellantriebs 1 mit einem Antriebsstrom, und einen Steuerausgang, der die Stellung eines der Schalteinheit zugeordneten Schalters 8, 9 gesteuert. Die Figur zeigt die Schalteinheit 6 in inaktivem und die Schalteinheit 7 in aktivem Zustand. Der der Schalteinheit 6 zugeordnete Schalter 8 verbindet den Leistungsausgang der Schalteinheit 6 und damit einen Pol des Verstellantriebs 1 mit Masse; der Schalter 9 ist offen, so daß ein von der Schalteinheit 7 ausgegebener Versorgungsstrom durch den Verstellantrieb 1 und den Schalter 8 gegen Masse fließt. In diesem Zustand bewegt sich die vom Verstellantrieb 1 angetriebene Scheibe in Schließrichtung. Wenn nun der Vergleicher 3 eine Überschreitung des durch U_{REF} kodierten Schwellwerts der Betätigungskraft anzeigt, deaktiviert die Steuerschaltung 5 die Schalteinheit 7 und aktiviert die Schalteinheit 6, woraufhin die Schalter 8, 9 jeweils ihre Stellung umkehren. Nun fließt ein Strom in Gegenrichtung durch den Verstellantrieb 1, und die Scheibe öffnet sich wieder.

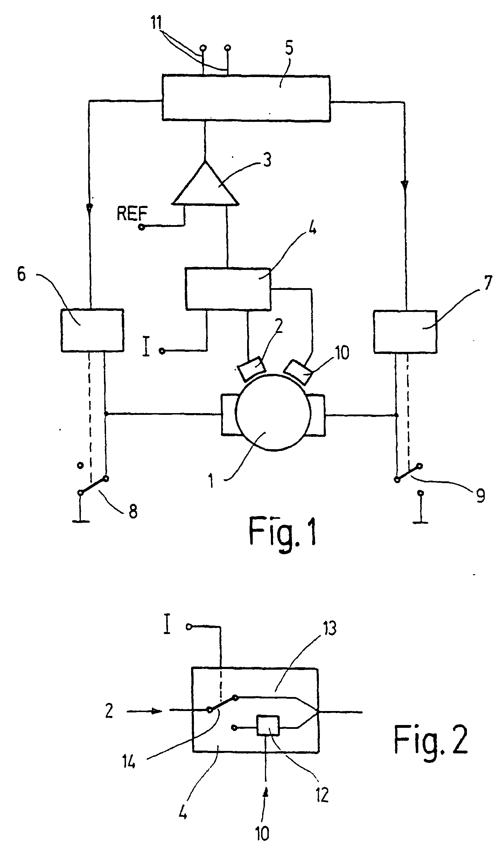

Die Filteranordnung 4 kann in unterschiedlicher Weise aufgebaut sein. Eine einfache Variante ist in Figur 2 gezeigt. Diese Anordnung umfaßt einen Filter 12, der in der Lage ist, das vom Sensor 2 gelieferte Signal anhand der vom Meßwertgeber 10 gelieferten Ortsinformationen zu verarbeiten, eine einfache Leitung 13, und einen Schalter 14, der, durch das Signal I gesteuert, den Sensor 2 entweder an die Leitung 13 oder den Filter 12 anschließt. Eine solche einfache Ausgestaltung kann insbesondere dann völlig ausreichend sein, wenn eine begrenzte Ortsauflösung des Sensors 2 und des Meßwertgebers 10 bereits dazu führt, daß Zunahmen der Betätigungskraft von mehr als 65 N/mm nicht erfaßt werden.

Selbstverständlich kann die Leitung 13 auch durch einen zweiten Filter ersetzt werden, der eine Filterung nach der zweiten Methode ausführt.

Eine weitere Alternative ist die Verwendung eines programmierbaren Filters als Filteranordnung, welcher Parameter seiner Übertragungsfunktion über Programmiereingänge in Abhängigkeit vom Pegel des Signals I empfängt.

Die Kopplung der verwendeten Filtermethode an den Zustand der Zündung des Kraftfahrzeugs ist aufgrund ihrer Einfachheit bevorzugt, da ein an die Zündung gekoppeltes Signal mit zwei Pegeln im elektrischen System eines jeden Kraftfahrzeugs vorhanden ist und lediglich an die Filtereinheit herangeführt werden muß. Alternativ kann das Signal I auch aus einer Überwachung des Bewegungszustands des Kraftfahrzeugs gewonnen werden. In einem solchen Falle wäre es möglich, auch dann nach der ersten Methode zu filtern, wenn das Fahrzeug mit eingeschaltetem Motor steht.

## Patentansprüche

1. Verfahren zum Betreiben eines Verstellantriebs (1) in einem Kraftfahrzeug, mit den Schritten
a) Ermitteln, insbesondere durch Messen, einer von dem Verstellantrieb (1) ausgeübten Betätigungskraft,
b) Vergleichen der Betätigungskraft mit einer Grenzkraft und
c) Reversieren des Verstellantriebs (1), wenn die Grenzkraft überschritten wird,
**dadurch gekennzeichnet, daß** die ermittelten Werte der Betätigungskraft vor dem Vergleichen nach einer ersten Methode gefiltert werden, um schnelle Änderungen der Betätigungskraft mit dem vom Verstellantrieb (1) zurückgelegten Weg zu unterdrücken, wenn das Kraftfahrzeug fährt, und nach einer zweiten Methode, bei der schnelle Änderungen weniger stark unterdrückt werden als bei der ersten Methode, oder gar nicht gefiltert werden, wenn das Kraftfahrzeug mit ausgeschaltetem Motor steht.

2. Verfahren nach Anspruch 1, **dadurch gekennzeichnet, daß** die ermittelten Werte nach der ersten Methode gefiltert werden, wenn der Motor des Kraftfahrzeugs gezündet ist.

3. Verfahren nach einem der vorhergehendem Ansprüche, **dadurch gekennzeichnet, daß** beim Filter nach der ersten Methode Anstiege der Betätigungskraft von mehr als 20 N/mm ausgefiltert werden.

4. Verfahren nach einem der vorhergehenden Ansprüche, **dadurch gekennzeichnet, daß** beim Filtern nach der zweiten Methode Anstiege der Betätigungskraft von mehr als 65 N/mm ausgefiltert werden.

5. Vorrichtung zur Durchführung des Verfahrens nach Anspruch 1, mit mindestens einem Sensor (2) zum Liefern eines Signals, das für die vom Verstellantrieb (1) ausgeübte Betätigungskraft repräsentativ ist, einem Vergleicher (3) zum Vergleichen des repräsentativen Signals mit einem Grenzwert und einer Steuerschaltung (5), die den Verstellantrieb (1) anhand des vom Vergleicher (3) gelieferten Signals steuert, **dadurch gekennzeichnet, daß** der Vergleicher (3) das Signal über eine Filteranordnung (4) empfängt, die bei fahrendem Kraftfahrzeug eine Filterung nach der ersten Methode und bei mit ausgeschaltetem Motor stehendem Kraftfahrzeug eine Filterung nach der zweiten Methode ausführt.

6. Vorrichtung nach Anspruch 6, **dadurch gekennzeichnet, daß** die Filteranordnung (4) einen Eingang für ein Steuersignal (I) hat, das angibt, ob der Motor des Kraftfahrzeugs gezündet ist oder nicht, und daß die Filteranordnung (14) entsprechend dem Zustand des Steuersignals (I) die Filterung nach der ersten beziehungsweise zweiten Methode ausführt.

## Claims

1. Method for operating an adjusting drive (1) in a motor vehicle, having the following steps
a) determination, in particular by a measurement, of an activation force which is exerted by the adjusting drive (1),
b) comparison of the activation force with a limiting force, and
c) reversal of the adjusting drive (1) if the limiting force is exceeded,
**characterized in that** the determined values of the activation force are filtered before the comparison, using a first method, in order to suppress rapid changes in the activation force with the distance covered by the adjusting drive (1) if the motor vehicle is travelling, and according to a second method in which rapid changes are suppressed to a lesser degree than in the first method, or are not filtered at all if the motor vehicle is stationary with the engine switched off.

2. Method according to Claim 1, **characterized in that** the determined values are filtered according to the first method if the ignition of the engine of the motor vehicle is switched on.

3. Method according to one of the preceding claims, **characterized in that**, in the filtering according to the first method, rises in the activation force of more than 20 N/mm are filtered out.

4. Method according to one of the preceding claims, **characterized in that**, in the filtering according to the second method, rises in the activation force of more than 65 N/mm are filtered out.

5. Device for carrying out the method according to Claim 1, having at least one sensor (2) for supplying a signal which is representative of the activation force which is exerted by the adjusting drive (1), a comparator (3) for comparing the representative signal with a limiting value and a control circuit (5) which controls the adjusting drive (1) by reference to the signal supplied by the comparator (3), **characterized in that** the comparator (3) receives the signal via a filter arrangement (4) which carries out filtering according to the first method when the motor vehicle is travelling, and carries out filtering according to the second method when the motor vehicle is stationary with the engine switched off.

6. Device according to Claim 6, **characterized in that** the filter arrangement (4) has an input for a control signal (I) which specifies whether the ignition of the engine of the motor vehicle is switched on or not, and **in that** the filter arrangement (14) carries out the filtering according to the first or second methods depending on the state of the control signal (I).

## Revendications

1. Procédé de mise en oeuvre d'un actionneur (1) dans un véhicule automobile comprenant les étapes suivantes :
a) on détermine en particulier par une mesure, la force d'actionnement exercée par un actionneur (1),
b) on compare la force d'actionnement à une force limite, et
c) on inverse l'actionneur (1) si la forme limite est dépassée,
**caractérisé en ce qu'**
on filtre selon une première méthode les valeurs obtenues de la force d'actionnement avant de les comparer, pour éliminer les variations rapides de la force d'actionnement en fonction de la course parcourue par l'actionneur (1) si le véhicule est en mouvement, et
selon une seconde méthode, par laquelle on élimine moins fortement les variations rapides que dans la première méthode ou on ne les élimine pas du tout si le véhicule est à l'arrêt, le moteur étant coupé.

2. Procédé selon la revendication 1,
**caractérisé en ce qu'**
on filtre les valeurs obtenues selon la première méthode si le moteur du véhicule fonctionne.

3. Procédé selon l'une quelconque des revendications précédentes,
**caractérisé en ce qu'**
en filtrant selon la première méthode on élimine les augmentations de la force d'actionnement supérieures à 20 N/mm.

4. Procédé selon l'une quelconque des revendications précédentes,
**caractérisé en ce qu'**
en filtrant selon la seconde méthode, on élimine les augmentations de la force d'actionnement dépassant 65 N/mm.

5. Dispositif pour la mise en oeuvre du procédé selon la revendication 1, comportant au moins un capteur (2) pour fournir un signal représentant la force d'actionnement exercée par l'actionneur (1), un comparateur (3) pour comparer le signal représentatif à une valeur limite et un circuit de commande (5) qui commande l'actionneur (1) à partir du signal fourni par le comparateur (3),
**caractérisé en ce que**
le comparateur (3) reçoit le signal par l'intermédiaire d'un filtre (4) qui effectue un filtrage selon une première méthode lorsque le véhicule circule et selon une seconde méthode de filtrage lorsque le véhicule est à l'arrêt, le moteur étant coupé.

6. Dispositif selon la revendication 5,
**caractérisé en ce que**
le filtre (4) comporte une entrée pour un signal de commande (I) indiquant si le moteur du véhicule fonctionne ou non, et
le filtre (4) exécute le filtrage selon la première méthode ou la seconde méthode selon l'état du signal de commande (I).
